# EUROPEAN PATENT APPLICATION

(11) **EP 3 524 548 A1**
(43) Date of publication of application: **14.08.2019**
(21) Application number: 18156042.6
(22) Date of filing: 09.02.2018
(51) Int. Cl.: B65G 47/54, B65G 47/71, B65G 1/04, B65G 1/137, B65G 61/00

(54) **A METHOD AND A DEVICE FOR COLLECTING A GOODS UNIT COMPRISING A PLURALITY OF PACKAGES**

(71) Applicant: Logevo AB, 34324 Älmhult (SE)
(72) Inventor: Svensson, Kim, 31261 Mellbystrand (SE)
(74) Representative: Hansson Thyresson AB

(57) **Abstract**

A method for collecting a goods unit comprising a plurality of packages from a multi-storey goods storage arrangement (10) comprising a plurality of levels of rows (12) arranged in parallel and comprising transport rails extending in parallel along the row, and aisles (18; 19) extending in parallel between opposing ends of sets of said rows (12). The method comprises
a) automatically picking a single package (16) in a row (12),
b) placing the single package (16) on a conveyor line (26),
c) transporting said single package (16) from the conveyor line (26) to an output line (29),
d) automatically picking up said single package (16) from said output line (29) in an assembling area (33),
e) rotating said single package (16) over a support device (37) and placing said single package (16) on said support device (37).

The device comprises a portal picker (82) extending over the assembling area (33), an assembling picker (64) supported by the portal picker (82), at least one lifting head (78) supported by a lifting support (80) of the assembling picker (64), at least one suction device (71) supported by the lifting head (78), and a vision system (84).

## Description

### TECHNICAL FIELD

A method and a device for collecting a goods unit comprising a plurality of packages from a multi-storey goods storage arrangement comprising a plurality of levels of rows arranged in parallel and comprising transport rails extending in parallel along the row, and supply aisles extending in parallel between opposing ends of sets of said rows.

### PRIOR ART

Multi-storey goods storage arrangements or pallet racks are used in a wide area of applications, such as conventional warehouses, storages and stores. WO2011119083 discloses a three-dimensional goods storage arrangement which comprises a system of beams with a number of levels and, arranged in these and extending in two main directions, passages/channels for goods. A lift is included together with transport elements and is controlled by control elements and sensors. The elements comprise means for automated transfer of goods. Each level or section thereof comprises a passage or channel extending in the first main direction. A carriage can be driven so as to be able to position the carriage in line with a number of second passages or channels, which are located alongside one another and which extend in the second main direction. A satellite can be driven onto or off of the carriage at the respective second passage or channel.

### SUMMARY OF THE INVENTION

In one aspect there is provided a method and a device for collecting a goods unit comprising a plurality of packages from a multi-storey goods storage arrangement comprising a plurality of levels of rows arranged in parallel and comprising transport rails extending in parallel along the row, and aisles extending in parallel between opposing ends of sets of said rows. The method comprises automatically picking a single package in a row, and placing the single package on a conveyor line extending out of said multi-storey goods storage arrangement. It further comprises transporting said single package on the conveyor line to an output line, automatically picking said single package from said output line in an assembling area extending over at least a section of said output line, rotating said single package over a support device and placing said single package on said support device. The method will provide an efficient way of assembling an order or goods unit comprising a plurality of packages. The order then can be made available or delivered to a customer.

A multi-storey goods storage arrangement is provided with a picker capable of picking up individual packages from rows inside the multi-storey goods storage arrangement. The picker is arranged to move with a picked-up package to a conveyor line extending out of the multi-storey goods storage arrangement and extending to an assembling area. In the assembling area, an assembling picker picks up the package, rotates it if appropriate, and places it on a support device. A supervising and control system determines the order in which the packages are directed to the assembling area. Normally, larger or wider packages with the largest bottom area are handled first to allow smaller packages to be placed on top of the larger packages on the support device.

In another aspect there is provided a device for collecting a goods unit comprising a plurality of packages from a multi-storey goods storage arrangement. The device comprises an output line extending from the conveyor line to an assembling area, a portal picker extending over the assembling area, an assembling picker supported by the portal picker operating a first length along the output line and a second length perpendicular to the output line, at least one lifting head supported by a lifting support of the assembling picker to be hoisted from a first position directly above said output line to a second position closer to the assembling picker, at least one suction device supported by the lifting head, wherein in the first position the suction device will engage a package supported on the output line, and wherein the lifting support is pivotally supported on the assembling picker, so as to rotate the lifting head with a package engaged and lifted by the suction device, and a vision system supported by the portal picker, wherein the vision system is operatively connected to the assembling picker and is arranged to direct the assembling picker to automatically pick said single package up from said output line and rotating said single package over a support device and placing said single package on said support device. The device will provide a goods unit that is efficiently organized on the support device to facilitate further transporting and handling of the goods unit.

In various embodiments, packages arriving on the conveyor line are moved to an output line extending into the assembling area. The output line is wide enough to support full length packages arriving with a longer side first. The output line has a length sufficiently long to support at least two packages in line at the time.

The assembling picker has an operating area extending over an end portion of the output line and over a delivery area where the support device is arranged. In various embodiments, the support device is a trolley or similar device capable of supporting at least one full length package. The trolley can be moved away from the delivery area and an empty trolley can replace the trolley with one or a plurality of packages.

In various embodiments, the support device is a customer conveyor. Packages can be placed by the assembling picker directly on the customer conveyor or to a baseboard or pallet already placed on the customer conveyor. The customer conveyor extends out of the assembling area.

### BRIEF DESCRIPTION OF THE DRAWINGS

The accompanying drawings, which are incorporated in and constitute a part of this specification, illustrate embodiments and together with the description, serve to explain the principles of the method and device:
- Fig. 1: is a schematic partial top view of one level of a first embodiment of a multi-storey goods storage arrangement with a device for collecting a goods unit,
- Fig. 2: is a schematic side view of an embodiment of a picking aisle in a four-level multi-storey goods storage arrangement,
- Fig. 3: is a schematic top view of a picker transfer cart,
- Fig. 4: is a schematic top view of a picker cart,
- Fig. 5: is a schematic top view of a device for collecting a goods unit,
- Fig. 6: is a schematic top view of an assembling picker used in the device, and
- Fig. 7: is a schematic partial side view of the device shown in Fig. 6.

### DETAILED DESCRIPTION

Multi-storey goods storage arrangements comprise a racking of uprights, beams cross braces and similar mechanical components. Shuttles and pickers are supported and transported on transfer carts along supply aisles. The shuttles and pickers are arranged to move away from a transfer cart or a picker transfer cart into the rows to leave goods or to pick up goods stored therein. Data related to most dimensions and positions of the racking are very carefully specified and stored in a computer-based system. Carts, shuttles and pickers run on rails in supply and picker aisles and rows, respectively.

The pickers can be provided with a cable winder. The cable of the cable winder is electrically connected to a power outlet on said picker transfer cart for providing electric power to a lifting yoke and to a locking device. Also compressed air and control signals can be transferred through the cable or cables. The length of the cable extends the length of a row and also the distance from a top level of the multi-storey goods storage arrangement the level where the conveyor is arranged. Thus, the lifting yoke is provided with electric power and control signals during operation.

At least one picker transfer cart normally is operating along each picking aisle at each or every second level, and each picker transfer cart supports a picker or picker cart. The pickers are suspended from the picker transfer carts supported on cart rails arranged in the picker transfer carts and are operable from the picker transfer carts into the rows. In the rows, the picker moves on transport rails. The pickers are provided with means for picking up goods stored on pallets, baseboards or other types of supports. After returning to the picker transfer cart and positioning the picker transfer cart above a conveyor the goods is lowered and placed on a conveyor.

The means for picking up goods comprises lifting means and a hoist. In various embodiments the means for picking up goods comprises a lifting yoke with a suction device. The picker cart comprises a locking device. The locking device will ensure that goods will remain in position on the picker, should the suction device be faulty.

Pickers normally are supported on a top rail arrangement on said picker transfer cart and are moveable out from said picker transfer cart into a rail arrangement in said rows. The rail arrangement of the row comprises transport rails where the pickers and shuttles are supported during transport in the rows.

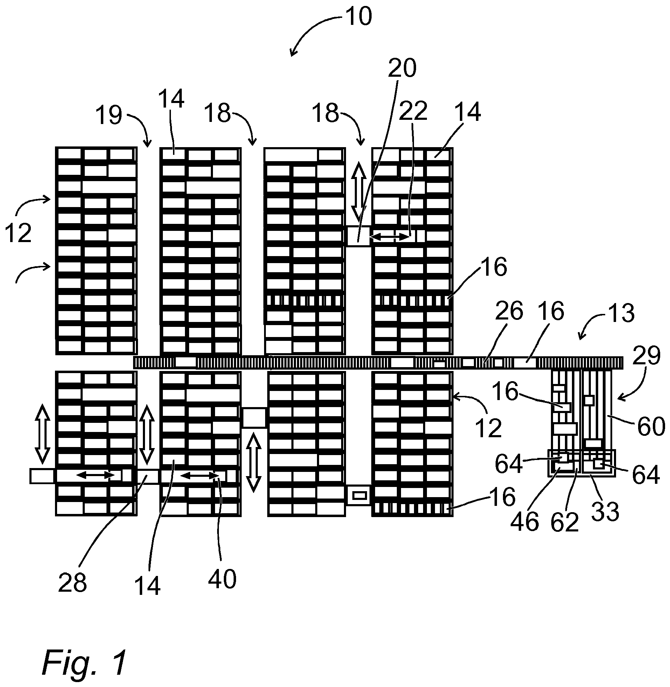

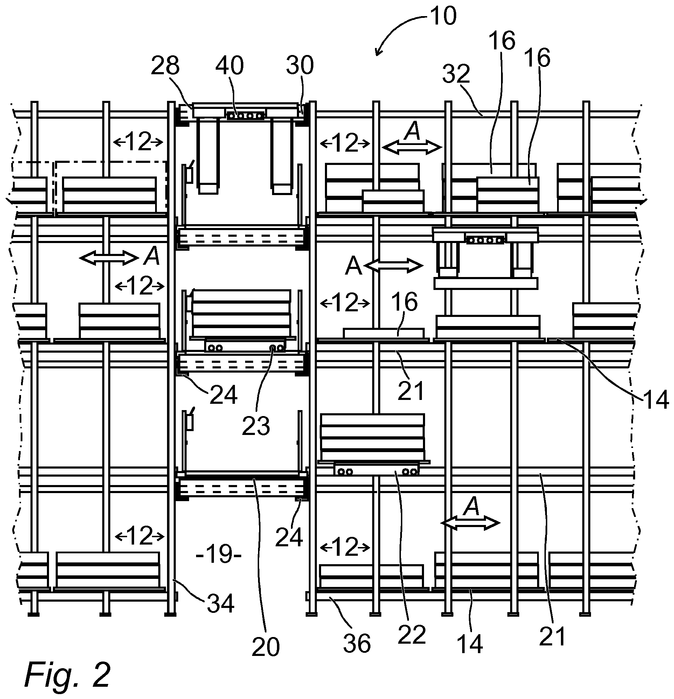

In the embodiment shown in Fig. 1 and Fig. 2 a multi-storey goods storage arrangement or pallet racking 10 comprises a plurality of levels of rows 12 in which baseboards or pallets 14 with packages 16 are stored. The rows 12 extend in two opposite directions from transport lines 18 extending between opposite ends of said rows 12, said transport lines 18 also having a plurality of levels. Baseboard transfer carts 20 supporting a shuttle 22 operate in said transport lines 18 in a direction perpendicular to the rows 12. The shuttle 22 is supported in a conventional way on shuttle wheels 23 on a rail system in a lower section of the baseboard transfer cart 20. A corresponding rail system with transport rails 21 extends along said rows 12 to allow said shuttle 22 to transport pallets or baseboards 14 to and from selected positions along said rows 12.

The rail system in said rows also supports baseboards or pallets 14 on which packages 16 are stored. In various embodiments, each baseboard 14 in one storage line 12 supports one type of articles or packages. Packages are received to and delivered from the multi-storey goods storage arrangement through different means.

Each shuttle 22 is arranged to move away from the transfer cart 20 into said rows 12 carrying packages 16 on baseboards 14. The baseboards 14 can be transported along a storage line 12 to be placed at a selected position in the storage line 12. The baseboards 14 also can be picked up at a selected position by the shuttle 22 and transported to the transfer cart 20 which then will transport the picked-up pallet along the transport line to a selected new storage line.

The multi-storey goods storage arrangement basically is a pallet racking with a plurality of uprights 34 and horizontal load beams 36. The load beams 36 can be designed as or include said rail system for supporting the shuttle 22. Conventional diagonal braces and horizontal braces can also be used.

The shuttle 22 moves from the transfer cart 20 into the rows 12 and back carrying pallets or baseboards 14 with or without packages 16. The shuttle 22 is provided with support means that can be raised in position under a baseboard 14 and kept in a raised position during transport in the storage line 12. When packages have reached an intended position in the storage line or elsewhere the support means is lowered and the packages will rest on rails or load beams 36 or on the baseboard transfer cart 20.

The multi-storey goods storage arrangement shown in Fig. 1 and Fig. 2 comprises also picking aisles 19 in which picker transfer carts 28 operate. The picking aisles 19 extend parallel to the transport aisles 18 and are normally arranged between transport aisles 18 forming an arrangement with alternating transport aisles 18 and picking aisles 19. In various embodiments, transport aisles 18 are combined with picking aisles 19. Picker transfer carts 28 operate back and forth in each picking aisle 19 running on rails 24. Each picker transfer cart 28 supports a picker cart 40 supported on a top cart rail arrangement 30 and movable into and out of a transport rail arrangement 32 in the rows 12 as indicated by arrow A.

In each transport aisle 18 at least one baseboard transfer cart 20 operates to transport baseboards 14 with packages 16 using shuttles 22 to selected positions in the rows 12. In each picking aisle 19 at least one picker transfer cart 28 is arranged to pick up packages 16 in the rows 12 using a picker cart 40. The shuttles 22 and the picker carts 40 have an operation distance corresponding the length of a storage line 12 between a transport aisle 18 and a picking aisle 19. All baseboards 14 and packages 16, respectively, in each storage line thus can be reached and positioned correctly. Goods picked from rows 12 can be put on conveyors 26.

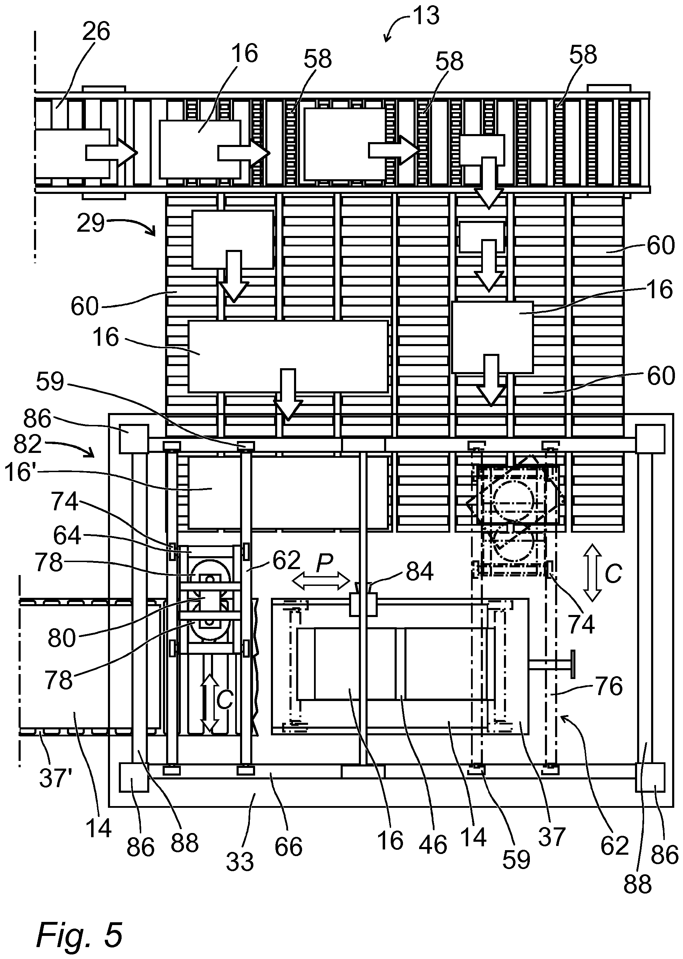

Packages 16 are moved to a device 13 for collecting a customer or goods unit 46 comprising at least one package 16. Packages 16 on the conveyor line 26 will be transferred onto an output line 29 comprising a plurality of output line conveyors 60. Output line 29 extends into an assembling area 33 where an assembling picker cart 62 with an assembling picker 64 is provided, c.f. Fig. 5. In various embodiments, two or more assembling picker carts 64 are provided in the assembling area 33.

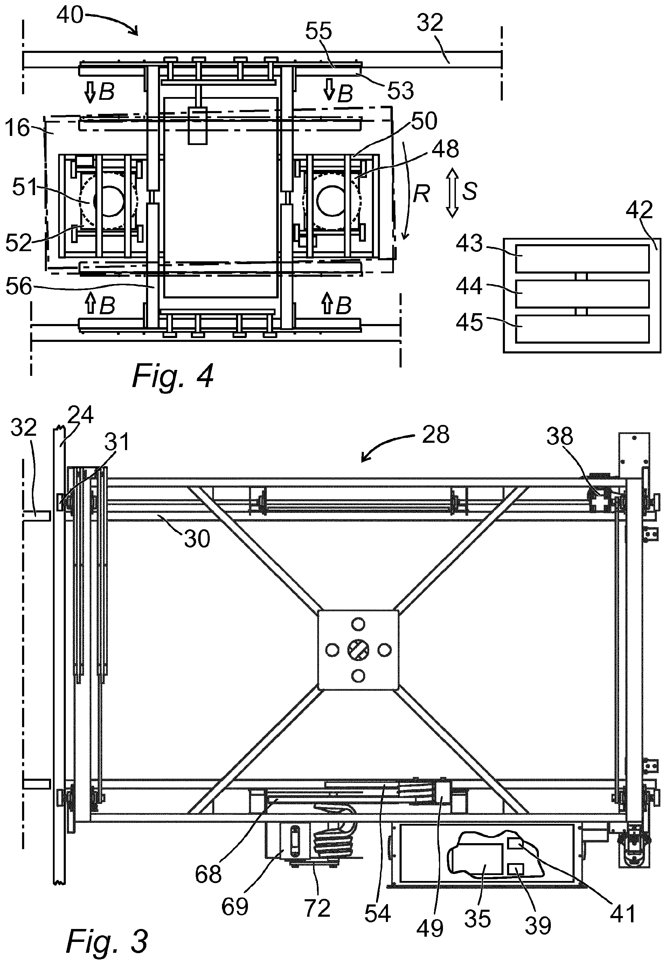

In the embodiment of a rectangular picker transfer cart 28 shown in Fig. 3 cart wheels 31 are arranged in each corner. The cart wheels run on rails 24 extending along a picking aisle 19 and are driven by a motor 38. Electrical power, compressed air and control signals are provided from the picker transfer cart 28 to a picker cart through a control cable 54. The control cable 54 is wound up on a cable winder 68 which is driven by a cable motor 69 through a chain 72. The length of the control cable 54 corresponds to or extends the length of a storage line, so as to allow full operation of the picker cart 40 along the full length of a storage line. The control cable 54 is formed as a chain and may comprise pipes, fibres and different types of electrical cables. The cable motor 69 has a defined moment to ensure that the control cable 54 is properly stretched and that the picker cart 40 does not spin. The cable motor 69 is provided with a pulse transducer which is used to determine the movement and position of the picker cart 40.

In the embodiment of a picker cart 40 shown in Fig. 4 two lifting yokes 48 are supported on a common carriage 50. When the picker cart 40 is positioned in a storage line for picking up a package the carriage 50 is centred above a package by sliding the carriage 50 as indicated by arrow S. When the correct position has been reached either one or both of lifting yokes 48 are lowered until a suction plate 51 of a suction device 52 engages the package 16. Then suction devices 52 are activated to be attached to the package 16 and a lifting mechanism (not shown) is activated to lift the package 16.

When the package has been lifted to a position where a bottom side of the package is above support sections 53 of plates 55 linear motion drives 56 are activated to move the plates 55 in the direction of arrows B. During this movement side edges of the plates 55 will engage side edges of the package 16. As a result, the package 16 will rotate as indicated by arrow R and be aligned with the plates 55. This is advantageous because further handling of the package 16 will be facilitated when a correct orientation thereof is ensured.

The baseboard transfer cart 20, picker transfer carts 28 and the picker carts 40 are provided with a control unit 35, a receiver 39 and a transmitter 41 communicating with a central unit 42. The control unit 35 receives control signals from the central unit 42 and then controls the movement and operations of the cart on the basis of the control signals. The central unit 42 comprises a processing unit 43, a communication device 44 and memory means 45. Power lines in the rails 24 can be used for communication between the central unit 42 and the baseboard transfer carts 20 and the picker transfer carts 28, respectively. Stationary data, such as dimensions, distances and performance of the multi-storey goods storage arrangement, carts and other units are stored in a database in the memory means 45. The database also stores data relating to position, dimensions, weight etc. of each package 16 in the multi-storey goods storage arrangement.

Dynamic data relating to location and size of specific packages or goods, baseboard, speed of conveyors etc. are continuously updated through the communication device 44 from and to carts and from a plurality of sensors and gauges arranged throughout the multi-storey goods storage arrangement. A control software running in the central unit 42 continuously monitors and controls the function of the multi-storey goods storage arrangement and the transport of packages within and out of the multi-storey goods storage arrangement. Information relating to different patterns or sets of packages is also stored and handled with the control software. As a result, any picked up package can be positioned and monitored throughout the handling thereof within and out of the multi-storey goods storage arrangement on the conveyor line 26, the output line 29 and also in the assembling area 33.

In the embodiment shown in Fig. 5 to Fig. 7 an end portion of the conveyor line 26 extends to the output line 29. Packages 16 arriving from the multi-storey goods storage arrangement are transferred from the conveyor line 26 to the output line 29. In various embodiments, conveyors such as belt conveyors 58 are arranged below the conveyor line 26. The belt conveyors 58 can be raised above the conveyor line 26 while supporting a package 16, and activated to move the package 16 from the conveyor line 26 to the output line 29. In other embodiments, other lifting means are provided to move packages 16 from the conveyor line 26 to the output line 29. As shown in Fig. 5, packages 16 can be moved on the output line 29 with a long side heading towards the assembling area 33. Belt conveyors 58 are controlled by the control software running in the central unit 42.

Depending on the length of the package 16, belt conveyors 58 will deliver each package 16 onto one to four output line conveyors 60. A shorter package 16 can be placed on one single output line conveyor 60 while longer or larger packages 16 will be placed on up to four output line conveyor 60. The control software running in the central unit 42 preferably will provide for larger or longer packages 16 to arrive at the output line 29 first. As a result, the larger packages 16 can be picked from the output line 29 first and be placed first on a support device 37 in the assembling area 33. As shown in Fig. 5 to Fig. 7, support device 37 can be a carriage or cart that can be moved away from the assembling area. In various embodiments, carriage is replaced by a customer conveyor 37', and packages 16 are placed either directly on the customer conveyor 37' or on a pallet or baseboard 14 placed on the customer conveyor 37'. In Fig. 5, customer conveyor 37' is shown cut off close to the carriage 37. It should be noted, that normally either a customer conveyor 37' or a carriage 37 is provided.

The assembling picker cart 62 is arranged to be moved in the direction of arrow P within substantially the full assembling area 33. In various embodiments, assembling picker cart 62 is arranged on a first set of wheels 59 running on a first set of rails 66 extending over substantially the full width of the assembling area 33 that is rectangular. Assembling picker cart 62 supports the assembling picker 64 arranged to be moved on a second set of wheels 74 a second set of rails 76 extending perpendicular to the first set of rails 66. The two sets of rails will allow the assembling picker 64 to move over the full assembling area 33.

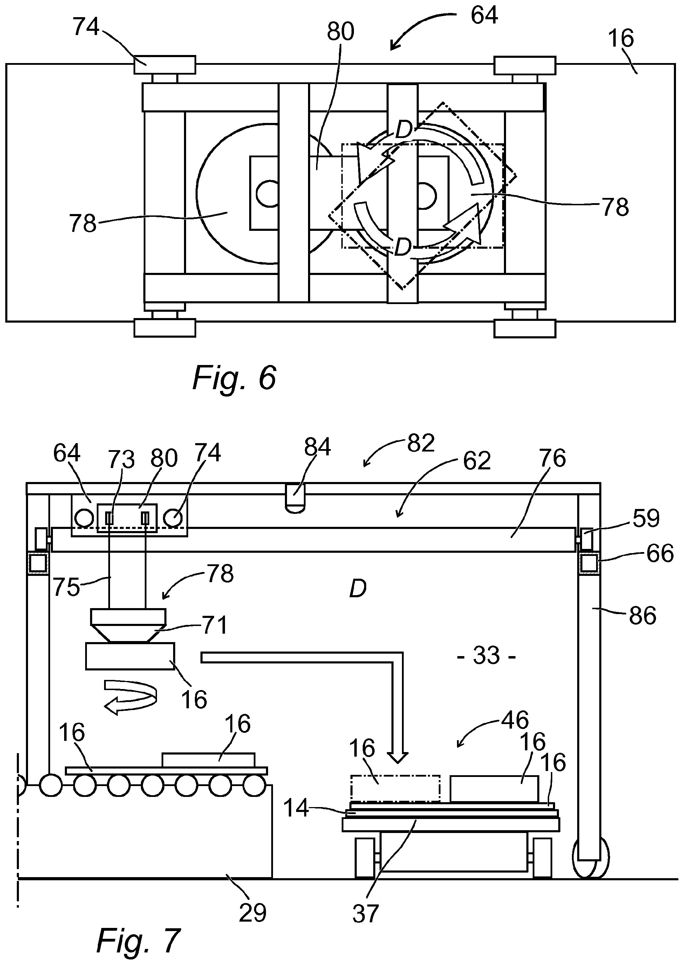

In various embodiments, assembling picker 64 comprises two lifting heads 78 that can be activated separately. At least one of the lifting heads 78 is pivotably supported by a lifting support 80 on the assembling picker 64. At least one lifting head 78 can be rotated as indicated by arrows D. The rotation of lifting head 78 is used to rotate a lifted package 16 to an appropriate orientation with respect to support device 37. In various embodiments, lifting heads 78 comprise a suction device 71 supported by the lifting support 80 comprising hoisting wheels 73 and hoisting belts 75 suspended from the hoisting wheels 73. The lifting head 78 is arranged to lift a package 16 from the output line 29 to a lifted-up position. In the lifted-up position, lifting head 78 can be rotated and thus rotate the package 16. As indicated in Fig. 6, a larger package 16 will be positioned at a central position below the assembling picker 64. Both lifting heads 78 will be activated to lift the larger package.

A picker portal 82 supports first set of rails 66 and a machine vision system 84 comprising a camera. Machine vision is used to provide imaging-based automatic inspection and analysis for providing location and orientation information to different components of the portal picker 82. The machine vision system 84 is arranged to determine a pattern made up of individual packages 16 in the customer goods unit 46. Packages 16 gathered on the output line 29 then will be picked up and moved to an appropriate position on the support device 37. In various embodiments, the picker portal 82 comprises posts 86 arranged in corners or the assembling area 33. Girders 88 connect the posts 86 to give the picker portal 82 a rectangular shape. In various embodiments, girders 88 are arranged at a height sufficiently large to allow a completed goods or customer unit 46 comprising a plurality of packages 16 to be moved out from the picker portal 82 on the support device 37.

The vision system 84 is arranged to locate packages 16 gathered on output line 29 within the assembling area 33 and to direct the assembling picker cart 62 and the assembling picker 64 to a position above the package 16. In Fig. 5, package 16' is the next package to be picked up by the assembling picker 64. In various embodiments, central unit 42 is arranged to receive position information from the vision system 84 and to direct the assembling picker cart 62 and the assembling picker 64 carrying a package 16 to a position above the support device 37. When the correct position has been reached either one or both of lifting heads 78 are lowered until the suction device 71 engages the package 16. Then the suction devices 71 are activated to be attached to the package 16. By activating the hoisting wheels 73 the hoisting belts 75 are wound up on the hoisting wheels 73 and the package is lifted. Central unit 42 also determines whether a package 16 needs to be rotated before positioned and placed on the support device 37.

The position of packages 16 previously placed on the support device 37 are determined by the vision system 84 and is used to position further packages 16 in appropriate positions. The order in which packages 16 arrive at the assembling area normally is determined by the central unit 42 on the basis of the shape and number of packages 16 belonging to one customer unit. Normally, larger packages 16 arrive first, so as to be placed first on the support device 37. In various embodiments, all or most of the packages 16 belonging to one customer goods unit 46 are gathered on the output line 29 before starting picking any packages 16 from the output line 29.

While certain illustrative embodiments of the invention have been described in particularity, it will be understood that various other modifications will be readily apparent to those skilled in the art without departing from the inventive concept. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. A method for collecting a goods unit comprising a plurality of packages from a multi-storey goods storage arrangement (10) comprising a plurality of levels of rows (12) arranged in parallel and comprising transport rails extending in parallel along the row, and aisles (18; 19) extending in parallel between opposing ends of sets of said rows (12), the method comprising:
a) automatically picking a single package (16) in a row (12),
b) placing the single package (16) on a conveyor line (26) extending out of said multi-storey goods storage arrangement (10),
c) transporting said single package (16) from the conveyor line (26) to an output line (29),
d) automatically picking up said single package (16) from said output line (29) in an assembling area (33) extending over at least a section of said output line (29),
e) rotating said single package (16) over a support device (37) and placing said single package (16) on said support device (37).

2. The method of claim 1, comprising determining a final pattern of packages (16) and picking, rotating and placing single packages (16) on the support device (37) in an order appropriate to obtain the final pattern.

3. The method of claim 1 or 2, comprising placing single packages (16) on the conveyor line (26) in a predetermined order based on bottom area of the packages (16), starting with a package (16) having the largest bottom area.

4. The method of any of the preceding claims, comprising storing data relating to size and weight of a package (16) in a memory means (45) and sending from a central unit (42) such data to a vision system (84) arranged in the assembling area (33).

5. The method of any of the preceding claims, comprising picking said single package (16) from said output line (29) with at least one lifting head (78) supported by an assembling picker (64) operable in the assembling area (33).

6. A device (13) for collecting a goods unit comprising a plurality of packages (16) from a multi-storey goods storage arrangement (10) comprising a plurality of levels of rows (12) arranged in parallel and comprising transport rails extending in parallel along the row, and aisles (18; 19) extending in parallel between opposing ends of sets of said rows (12), wherein an elongated conveyor line (26) for transporting the packages (16) extend out of the multi-storey goods storage arrangement (10), **characterised by**
an output line (29) extending from the conveyor line (26) to an assembling area (33),
a portal picker (82) extending over the assembling area (33),
an assembling picker (64) supported by the portal picker (82) operating a first length along the output line (29) and a second length perpendicular to the output line (29),
at least one lifting head (78) supported by a lifting support (80) of the assembling picker (64) and arranged to be hoisted from a first position directly above said output line (29) to a second position closer to the assembling picker (64),
at least one suction device (71) supported by the lifting head (78), wherein in the first position the suction device (71) will engage a package supported on the output line (29), and wherein the lifting support (80) is pivotally supported on the assembling picker (64), so as to rotate the lifting head (78) with a package (16) engaged and lifted by the suction device (71), and
a vision system (84) supported by the portal picker (82), wherein the vision system (84) is operatively connected to the assembling picker (64) and is arranged to direct the assembling picker (64) to automatically picking said single package (16) from said output line (29) and rotating said single package (16) over a support device (37) and placing said single package (16) on said support device (37).

7. The device of claim 6, wherein the lifting head (78) comprises a suction device (71).

8. The device of claim 6, comprising an assembling picker cart (62) supporting said assembling picker (64), wherein said assembling picker cart (62) is operable the second length perpendicular to the output line (29) while supporting said assembling picker (64).

9. The device of claim 8, wherein the assembling picker cart (62) comprises a first set of wheels (59) running on a first set of rails (66) extending over substantially the full width of the assembling area (33).

10. The device of claim 8, wherein the assembling picker cart (62) comprises a second set of rails (76) and wherein said assembling picker (64) comprises a second set of wheels (74) running on said second set of rails (76).

11. The device of claim 9 or claim 10, wherein the picker portal (82) comprises posts (86) supporting said first set of rails (66).

12. The device of any of the preceding claims, wherein a belt conveyor (58) is provided in the conveyor line (26) and operating perpendicular to the conveyor line (26), and wherein said belt conveyor (58) is arranged to be moved from a first position below the conveyor line (26) to a second position above the conveyor line (26) to move packages (16) from the conveyor line (26) to the output lined (29).

13. The device of any of the preceding claims, wherein the output line (29) comprises a plurality of output line conveyors (60).
